# EUROPÄISCHE PATENTSCHRIFT

(11) **EP 1 721 937 B1**
(45) Veröffentlichungstag und Bekanntmachung des Hinweises auf die Patenterteilung: **02.04.2008**
(21) Anmeldenummer: 06008771.5
(22) Anmeldetag: 27.04.2006
(51) Int. Cl.: C08L 83/04

(54) **Hochviskose Polydiorganosiloxane enthaltende additionsvernetzbare Siliconmassen**
Addition curable silicone compositions which contain highly viscous polydiorganosiloxanes
Compositions de silicone durcissables par addition qui contiennent des polydiorganosiloxanes de haute viscosité

(30) Priorität: 12.05.2005 DE 102005022106
(43) Veröffentlichungstag der Anmeldung: 15.11.2006
(73) Patentinhaber: Wacker Chemie AG, 81737 München (DE)
(72) Erfinder: Wörner, Christof, Dr., 84489 Burghausen (DE)
(74) Vertreter: Fritz, Helmut

(56) Entgegenhaltungen:
- EP-A- 0 798 342
- US-A- 4 061 609
- US-A- 5 574 073
- US-A1- 2004 132 947

## Beschreibung

Die Erfindung betrifft additionsvernetzbare Siliconmassen, ein Verfahren zu Ihrer Herstellung sowie die daraus erhältlichen Siliconelastomere, ihre Herstellung und Verwendung.

Bekanntermaßen können durch Zusatz von Polydiorganosiloxanen mit kettenständigen Alkenylgruppen zu alkenyldiorganosiloxy-terminierten Polydiorganosiloxanen mit einer Viskosität von bis zu 200.000 mPas additionsvernetzbare Flüssigsiliconkautschuke, sogenannte LSR-Massen, hergestellt werden, die nach der Vernetzung Siliconelastomere mit verbesserter Mechanik liefern. Dies gilt insbesondere für den Weiterreißwiderstand nach ASTM D 624 B. Um die mechanischen Eigenschaften, insbesondere den Weiterreißwiderstand, zu verbessern, werden zu alkenyldiorganosiloxy-terminierten Polydiorganosiloxanen zum einen Polydiorganosiloxane mit end- und kettenständigen Alkenylgruppen oder niederviskose alkenyldiorganosiloxyterminierte Polydiorganosiloxane eingesetzt.

EP 0 305 073 A2 beschreibt die Verbesserung der mechanischen Eigenschaften, insbesondere des Weiterreißwiderstands, durch Zugabe eines Polydiorganosiloxans, das Vinylgruppen sowohl am Kettenende als auch in der Kette trägt und eine Viskosität von 100-200.000 mPas besitzt, zu einem vinylterminierten Polydiorganosiloxan mit einer Viskosität von 20.000 bis 200.000 mPas. Mit dieser Polymer-Kombination können Siliconelastomere mit einem Weiterreißwiderstand von ca. 40 N/mm (ASTM D624) und einer Reißdehnung von maximal 580% bei einer Härte von ca. 50 Shore A erhalten werden.

EP 0 695 787 A2 beschreibt die Verbesserung des Weiterreißwiderstands mit Hilfe eines niedermolekularen vinylterminierten Polydiorganosiloxans mit einer Viskosität von 1,0 bis <50 mPas. Allerdings hat der Zusatz solch niederviskoser vinylterminierter Polydiorganosiloxane eine Reduzierung der Reißdehnung zur Folge.

Der vorliegenden Erfindung liegt daher die Aufgabe zugrunde, additionsvernetzbare Siliconmassen bereitzustellen, die zu Siliconelastomeren mit hoher Reißdehnung bei gleichzeitig hohem Weiterreißwiderstand vernetzen.

Die Aufgabe konnte überraschend durch die erfindungsgemäßen additionsvernetzbaren Siliconmassen gelöst werden. Gegenstand der Erfindung sind additionsvernetzbare Siliconmassen, enthaltend
(A) 100 Gewichtsteile vinylendständiges Polydiorganosiloxan mit einer Viskosität von 5.000 bis 1.000.000 mPas, wobei das Polydiorganosiloxan maximal 0,1 Mol.-% kettenständige Vinylgruppen aufweist,
(B) 0,1 bis 50 Gewichtsteile Polydiorganosiloxan mit einer Viskosität von 200 bis 1.000.000 mPas, wobei das Polydiorganosiloxan 0,5 bis 30 Mol.-% kettenständige Vinylgruppen aufweist,
(C) 1 bis 150 Gewichtsteile Polydiorganosiloxan mit einer Viskosität von mindestens 2.000.000 mPas, wobei das Polydiorganosiloxan keine bis maximal drei kettenständige Vinylgruppen pro Polymerkette aufweist,
(D) SiH-funktionelles Vernetzungsmittel,
(E) Hydrosilylierungskatalysator, und
(F) 0-90 Gewichtsteile eines Füllstoffs mit einer spezifischen Oberfläche von mindestens 50 m²/g.

Durch Verwendung des vinylterminierten Polydiorganosiloxans (A) in Kombination mit einem Polydiorganosiloxan (B), das Vinylgruppen in der Kette und optional auch am Kettenende trägt, und des hochmolekularen Polydiorganosiloxans (C) werden LSR-Elastomere erhalten, die sehr hohe Reißdehnungen und Weiterreißwiderstände aufweisen.

Vorzugsweise beträgt die Viskosität des Polydiorganosiloxans (B) höchstens 200%, insbesondere höchstens 100% der Viskosität des Polydiorganosiloxans (A) und die Viskosität des Polydiorganosiloxans (C) mindestens 500%, insbesondere mindestens 800% der Viskosität des Polydiorganosiloxans (A).

Das vinylendständige Polydiorganosiloxan (A) besteht vorzugsweise aus
aus 2 Einheiten der allgemeinen Formel (1) je Molekül

   [R₂R¹SiO_{1/2}] (1),

   und
   Einheiten der allgemeinen Formel (2)

   [R₂SiO_{2/2}] (2)

   und zeigt eine Viskosität von 5.000 bis 1.000.000 mPas,
   wobei
   - R: gleiche oder verschiedene einwertige, gegebenenfalls halogen- oder cyanosubstituierte, über SiC-gebundene C1-C18-Kohlenwasserstoffreste, die frei sind von aliphatischen Kohlenstoff-Kohlenstoff Mehrfachbindungen und
   - R1: gleiche oder verschiedene einwertige, gegebenenfalls halogen- oder cyanosubstituierte, gegebenenfalls über eine organische zweiwertige Gruppe an Silicium gebundene C1-C10- Alkenylgruppen
   bedeuten.

Das vinylendständige Polyorganosiloxan (A) zeigt bevorzugt eine Viskosität von 7.000 bis 700.000 mPas, besonders bevorzugt von 9.000 bis 600.000 mPas.

Das vinylendständige Polyorganosiloxan (A) trägt bevorzugt keine kettenständigen Vinylgruppen.

Beispiele für unsubstituierte Kohlenwasserstoffeste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.

Beispiele für substituierte Kohlenwasserstoffreste als Reste R sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

Bei dem Kohlenwasserstoffrest R handelt es sich bevorzugt um unsubstituierte und substituierte C1- bis C6-Alkylreste und den Phenylrest, insbesondere um den Methyl- und Phenylrest.

Die Alkenylgruppen R¹ sind einer Anlagerungsreaktion mit dem SiH-funktionellen Vernetzungsmittel (D) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen R¹ an Silicium der Polymerkette gebunden sein können, bestehen beispielsweise aus Oxyalkyleneinheiten, wie solche der allgemeinen Formel (3)

-(O)ₘ[(CH₂)ₙO]ₒ- (3),

in der
- m: die Werte 0 oder 1, insbesondere 0,
- n: Werte von 1 bis 4, insbesondere 1 oder 2 und
- o: Werte von 1 bis 20, insbesondere von 1 bis 5 bedeuten.
Die Oxyalkyleneinheiten der allgemeinen Formel (3) sind links an ein Siliciumatom gebunden.

Das vinylgruppenhaltige Polydiorganosiloxan (B) besteht vorzugsweise aus
Einheiten der allgemeinen Formel (2),
0,5 bis 30 mol-% Einheiten der allgemeinen Formel (4)

[RR¹SiO_{2/2}] (4),

und
0, 1 oder 2 Einheiten der allgemeinen Formel (1) oder 2, 1 oder 0 Einheiten der allgemeinen Formel (5) je Molekül

[R₃SiO_{1/2}] (5),

und zeigt eine Viskosität von 200 bis 1.000.000 mPas,
wobei R und R¹ die selbe Bedeutung haben, wie oben.

Bevorzugt hat das vinylgruppenhaltige Polydiorganosiloxan (B) eine Viskosität von 500 bis 100.000 mPas, besonders bevorzugt 1.000 bis 50.000 mPas.

Das Polydiorganosiloxan (C) besteht vorzugsweise aus
0, 1 oder 2 Einheiten der allgemeinen Formel (1) oder 2, 1 oder 0 Einheiten der allgemeinen Formel (5) je Molekül,
Einheiten der allgemeinen Formel (2) und
0, 1 , 2 oder 3 Einheiten der allgemeinen Formel (4) je Molekül
und zeigt eine Viskosität von mindestens 2.000.000 mPas.

Bevorzugt hat das Polydiorganosiloxan (C) eine Viskosität von 3.000.000 bis 40.000.000 mPas, besonders bevorzugt von 4.000.000 bis 35.000.000 mPas.

Bevorzugt hat das Polydiorganosiloxan (C) keine kettenständigen Vinylgruppen in der Polymerkette.

Bevorzugt weist das Polydiorganosiloxan (C) einen Si-gebundenen OH-Gehalt, von maximal 100 Gew.-ppm auf. Besonders bevorzugt ist der OH-Gehalt <50 Gew.-ppm.

Das SiH-funktionelle Vernetzungsmittel (D) ist vorzugsweise eine siliciumorganische Verbindung oder eine Mischung aus mindestens 2 siliciumorganischen Verbindungen, welche mindestens zwei, bevorzugt mindestens drei an Silicium gebundene Wasserstoffatome pro Molekül enthalten.

Das Vernetzungsmittel (D) wird vorzugsweise so eingesetzt, dass das Verhältnis seiner an Silicium gebundenen Wasserstoffatome zur Summe der Kohlenstoff-Kohlenstoff-Mehrfachbindungen der Polyorganosiloxane (A) + (B) + (C) + Kohlenstoff-Kohlenstoff-Mehrfachbindungen der Füllstoffe (F) mindestens 1,1 : 1 beträgt.

Der SiH-Vernetzer (D), der mindestens zwei, bevorzugt mindestens drei SiH-Funktionen pro Molekül enthaltende Organosiliciumverbindung aufweist, besteht vorzugsweise aus Einheiten der durchschnittlichen allgemeinen Formel (6)

HₐR³_{b}SiO_{(4-a-b)/2} (6),

wobei
- R³: unabhängig von einander, einwertige, gegebenenfalls halogen- oder cyanosubstituierte, über SiC-gebundene C₁₋C₁₀- Kohlenwasserstoffreste, die frei sind von aliphatischen Kohlenstoff-Kohlenstoff-Mehrfachbindungen,
- a: 0, 1, 2 oder 3,
- b: 0, 1, 2 oder 3, und
die Summe a+b≤3
bedeutet,
mit der Maßgabe, dass mindestens zwei siliciumgebundene Wasserstoffatome pro Molekül vorhanden sind.

Beispiele für unsubstituierte Reste R³ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste R³ sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

R³ weist vorzugsweise 1 bis 6 Kohlenstoffatome auf. Insbesondere bevorzugt sind Methyl, 3,3,3-Trifluorpropyl und Phenyl.

Bevorzugt ist die Verwendung einer drei oder mehr SiH-Bindungen pro Molekül enthaltenden Organosiliciumverbindung (D).

Der Wasserstoffgehalt der Organosiliciumverbindung (D), welcher sich ausschließlich auf die direkt an Siliciumatome gebundenen Wasserstoffatome bezieht, liegt vorzugsweise im Bereich von 0,002 bis 1,7 Gew.-% Wasserstoff, besonders bevorzugt von 0,1 bis 1,7 Gew.-% Wasserstoff.

Die Organosiliciumverbindung (D) enthält vorzugsweise mindestens drei und höchstens 600 Siliciumatome pro Molekül. Besonders bevorzugt ist die Verwendung von Organosiliciumverbindungen (D), die 4 bis 200 Siliciumatome pro Molekül enthalten.

Die Struktur der Organosiliciumverbindung (D) kann linear, verzweigt, cyclisch oder netzwerkartig sein.

Besonders bevorzugte Organosiliciumverbindungen (D) sind lineare Polyorganosiloxane der durchschnittlichen allgemeinen Formel (7)

(R⁴₃SiO_{1/2})_{d}(HR⁴SiO_{2/2})ₑ(R⁴₂SiO_{2/2})_{f} (7),

worin
- R⁴: die Bedeutungen von R³ hat und
- d, e, f: nichtnegative ganze Zahlen
bedeuten,
mit der Maßgabe, dass die Gleichungen d = 2, e > 2,
5 < (e+f) < 200 und 0,1 < e/(e +f) < 1 erfüllt sind.

Der SiH-funktionelle Vernetzer (D) ist vorzugsweise in einer solchen Menge in der vernetzbaren Siliconmasse enthalten, dass das Molverhältnis von SiH-Gruppen zu Kohlenstoff-Kohlenstoff-Mehrfachbindungen mindestens 1,1 : 1, bevorzugt 1,1 bis 5 : 1 insbesondere bevorzugt 1,1 bis 3 : 1 beträgt.

Als Hydrosilylierungskatalysator (E) können vorzugsweise alle bekannten Katalysatoren eingesetzt werden, welche die bei der Vernetzung von additionsvernetzenden Siliconmassen ablaufenden Hydrosilylierungsreaktionen katalysieren.

Als Hydrosilylierungskatalysatoren (E) werden insbesondere Metalle und deren Verbindungen aus der Gruppe enthaltend Platin, Rhodium, Palladium, Ruthenium und Iridium eingesetzt. Vorzugsweise wird Platin verwendet.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden beziehungsweise Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP 1 077 226 A1 und EP 0 994 159 A1 beschriebenen Platinverbindungen, deren diesbezügliche Offenbarung auch Gegenstand dieser Anmeldung sein soll.

Der Hydrosilylierungskatalysator (E) kann in jeder beliebigen Form eingesetzt werden, beispielsweise auch in Form von Hydrosilylierungskatalysator enthaltenden Mikrokapseln, oder Polyorganosiloxanpartikeln, wie beschrieben in EP 1 006 147 A1, deren diesbezügliche Offenbarung auch Gegenstand dieser Anmeldung sein soll.

Der Gehalt an Hydrosilylierungskatalysatoren (E) wird so gewählt, dass die additionsvernetzbare Siliconmasse einen Pt-Gehalt von 0,1 bis 200 ppm, bevorzugt von 0,5 bis 40 ppm besitzt.

Der verstärkende Füllstoff (F) wird ausgewählt aus der Gruppe enthaltend gefällte und pyrogene Kieselsäuren sowie Ruß.

Bevorzugt sind gefällte und pyrogene Kieselsäuren, sowie Gemische derselben. Besonders bevorzugt sind mit Silyliermittel oberflächenbehandelte pyrogene Kieselsäure. Die Hydrophobierung der Kieselsäure kann entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Als Silylier-Agenzien können alle dem Fachmann bekannten Hydrophobiermittel verwendet werden. Diese sind vorzugsweise Silazane, insbesondere Hexamethyldisilazan und/oder 1,3-Divinyl-1,1,3,3-tetramethyldisilazan, und/oder Polysilazane, wobei auch zusätzlich Wasser eingesetzt werden kann, verwendet. Zusätzlich können auch andere Silylier-Agenzien, wie beispielsweise SiOH- und/oder SiCl- und/oder Alkoxy-funktionelle Silane, beziehungsweise Siloxane als Hydrophobiermittel verwendet werden. Ebenso können zyklische, lineare oder verzweigte nicht-funktionelle Organosiloxane, wie beispielsweise Octamethylcyclotetrasiloxan oder Polydimethylsiloxan, jeweils für sich genommen oder zusätzlich zu Silazanen als Silylier-Agenzien eingesetzt werden. Um die Hydrophobierung zu beschleunigen, ist auch der Zusatz von katalytisch aktiven Additiven, wie beispielsweise Hydroxiden, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugt sind gefällte oder pyrogene Kieselsäuren. Besonders bevorzugt ist eine Kieselsäure mit einer spezifischen Oberfläche nach BET von 80-400 ²/g, besonders bevorzugt 100-400 m²/g.

Besonders bevorzugt wird als Gehalt an Füllstoff (F) 5-40 Gew.-% bezogen auf (A) + (B) + (C) + (D).

Die Siliconmassen können wahlweise als weiteren Bestandteil (G) mögliche Zusätze zu einem Anteil von 0 bis 70 Gew.-%, vorzugsweise 0,0001 bis 40 Gew.-%, enthalten. Diese Zusätze können beispielsweise harzartige Polyorganosiloxane, die von den Polyorganosiloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren, Inhibitoren usw. sein. Hierzu zählen Zusätze, wie Farbstoffe, Pigmente usw. Des Weiteren können als Bestandteil thixotropierende Bestandteile, wie hochdisperse Kieselsäure oder andere handelsübliche Thixotropieadditive enthalten sein.

Enthalten sein können weitere Zusätze, die der gezielten Einstellung der Verarbeitungszeit, Anspringtemperatur und Vernetzungsgeschwindigkeit der vernetzenden Massen dienen. Diese Inhibitoren und Stabilisatoren sind auf dem Gebiet der vernetzenden Massen sehr gut bekannt.

Zusätzlich können auch Additive hinzugefügt werden, wie beispielsweise die in EP 0 834 534 A1 beschriebenen Schwefelverbindungen, deren diesbezügliche Offenbarung auch Gegenstand dieser Anmeldung sein soll, die den Druckverformungsrest verbessern. Zusätzlich können auch Hohlkörper beziehungsweise expandierbare Hohlkörper hinzugefügt werden. Zusätzlich können auch Treibmittel zur Erzeugung von Schäumen hinzugefügt werden.

Ein weiterer Gegenstand der vorliegenden Erfindung ist ein Verfahren zur Herstellung der erfindungsgemäßen additionsvernetzbaren Siliconmassen, ein Verfahren zur Herstellung der vernetzten Siliconelastomere aus den erfindungsgemäßen additionsvernetzbaren Siliconmassen durch Additionsvernetzung sowie die so erhältlichen Siliconelastomer-Formteile.

Die Herstellung oder Compoundierung der Siliconmassen erfolgt durch Mischen der Polyorganosiloxane (A), (B), (C) und Füllstoff (F). Die Vernetzung erfolgt nach Zugabe von Vernetzer (D) und Hydrosilylierungskatalysator (E), vorzugsweise durch Erwärmen, vorzugsweise bei 30 bis 250°C, bevorzugt bei mindestens 50°C, insbesondere bei mindestens 100°C, besonders bevorzugt bei 150-210°C.

Als Energiequellen für die Vernetzung durch Erwärmen werden vorzugsweise Öfen, beispielsweise Umlufttrockenschränke, Heizkanäle, beheizte Walzen, beheizte Platten oder Wärmestrahlen des Infrarotbereiches verwendet.

Die erfindungsgemäßen Massen eignen sich zur Herstellung von additionsvernetzenden RTV- und LSR-Massen, wobei vorzugsweise die erste Komponente neben (A), (B), (C) und (F) den Hydrosilylierungskatalysator (E) und die zweite Komponente neben (A), (B), (C) und (F) den SiH-Vernetzer (D) enthält.

Die Formteile werden vorzugsweise mittels Spritzguss aus den erfindungsgemäßen LSR-Massen hergestellt. Beispielweise lassen sich so aus den erfindungsgemäßen additionsvernetzbaren Siliconmassen Schnuller oder Dichtungen erhalten, die sich insbesondere durch ihren hohen Weiterreißwiderstand auszeichnen.

### Beispiele

Die nachfolgenden Beispiele beschreiben die prinzipielle Ausführbarkeit der vorliegenden Erfindung, ohne jedoch diese auf die darin offenbarten Inhalte zu beschränken.

### Beispiel 1 (nicht erfindungsgemäß)

### Herstellung der Grundmasse:

In einem Laborkneter wurden 750 g eines vinyldimethylsiloxy-terminierten Polydimethylsiloxans mit einer Viskosität von 20.000 mPas (25°C) vorgelegt, auf 150°C aufgeheizt und mit 550 g einer hydrophoben pyrogenen Kieselsäure mit einer spezifischen Oberfläche nach BET von 300 m2/g und einem Kohlenstoffgehalt von 3,9 Gew.-% versetzt. Es entstand eine hochviskose Masse, die anschließend mit 220 g eines vinyldimethylsiloxy-terminierten Polydimethylsiloxans mit einer Viskosität von 20.000 mPas (25°C) verdünnt wurde. Durch Kneten unter Vakuum (10 mbar) bei 150°C wurden innerhalb einer Stunde flüchtige Bestandteile entfernt.

### Beispiel 2 (nicht erfindungsgemäß)

560 g der in Beispiel 1 hergestellten Grundmasse wurden auf einer Walze bei einer Temperatur von 25°C mit 140 g eines vinyldimethylsiloxy-terminierten Polydimethylsiloxans mit einer Viskosität von 20.000 mPas (25°C), 0,50 g Ethinylcyclohexanol, 11,4 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt.

Die auf diese Weise hergestellte Siliconmasse wurde anschließend in einer hydraulischen Presse bei einer Temperatur von 170°C innerhalb von 10 Minuten vernetzt. Die entformten, etwa 2 beziehungsweise 6 mm dicken Siliconelastomerfolien wurden 4 Stunden bei 200°C in einem Umluftofen getempert.

### Beispiel 3 (nicht erfindungsgemäß)

560 g der in Beispiel 1 hergestellten Grundmasse wurden auf einer Walze bei einer Temperatur von 25°C mit 105 g eines vinyldimethylsiloxy-terminierten Polydimethylsiloxans mit einer Viskosität von 20.000 mPas (25°C), 35 g eines trimethylsiloxy-terminierten Polydimethylsiloxans, welches 2,1 Mol.-% Vinylmethylsiloxy-Einheiten in der Kette und eine Viskosität von 20.000 mPas (25°C) aufweist, 0,50 g Ethinylcyclohexanol, 11,4 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt.

Die Vernetzung der additionsvernetzenden Masse erfolgte wie in Beispiel 2 beschrieben.

### Beispiel 4 (nicht erfindungsgemäß)

Wie in Beispiel 2 beschrieben, jedoch wurde anstelle des in Beispiel 2 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

### Beispiel 5 (nicht erfindungsgemäß)

Wie in Beispiel 2 beschrieben, jedoch wurde anstelle des in Beispiel 2 verwendeten vinyldimethylsiloxy-terminierten Polydimethylsiloxans mit einer Viskosität von 20.000 mPas (25°C) ein vinyldimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

### Beispiel 6 (nicht erfindungsgemäß)

Wie in Beispiel 2 beschrieben, jedoch wurde anstelle des in Beispiel 2 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 30.000 mPas (25°C) eingesetzt. Die übrige Zusammensetzung der Siliconmasse sowie die Weiterverarbeitung blieben unverändert.

### Beispiel 7 (nicht erfindungsgemäß)

Wie in Beispiel 3 beschrieben, jedoch wurde anstelle des in Beispiel 3 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 30.000 mPas (25°C) eingesetzt. Die übrige Zusammensetzung der Siliconmasse sowie die Weiterverarbeitung blieben unverändert.

### Beispiel 8 (nicht erfindungsgemäß)

Wie in Beispiel 3 beschrieben, jedoch wurde anstelle des in Beispiel 3 verwendeten vinyldimethylsiloxy-terminierten Polydimethylsiloxans mit einer Viskosität von 20.000 mPas (25°C) ein vinyldimethylsiloxy-terminiertes Polydimethylsiloxan mit einer Viskosität von 20.000.000 mPas (25°C) eingesetzt, das fünf kettenständige Vinylgruppen aufweist. Die übrige Zusammensetzung der Siliconmasse sowie die Weiterverarbeitung blieben unverändert.

### Beispiel 9

Wie in Beispiel 3 beschrieben, jedoch wurde anstelle des in Beispiel 3 verwendeten vinyldimethylsiloxy-terminierten Polydimethylsiloxans mit einer Viskosität von 20.000 mPas (25°C) ein vinyldimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

### Beispiel 10

Wie in Beispiel 3 beschrieben, jedoch wurde anstelle des in Beispiel 3 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

Der Einfluss der Viskosität eines hochviskosen vinyldimethylbeziehungsweise trimethylsiloxy-terminierten Polydimethylsiloxans und eines Polydiorganosiloxans mit kettenständigen Alkenylgruppen auf die mechanischen Eigenschaften von LSR-Elastomeren ist in Tabelle 1 wiedergegeben.

**Tabelle 1**

| | Viskosität unvernetzte LSR-Masse | Härte | Weiterreiß- widerstand (ASTM D624) | Reißfestigkeit | Reißdehnung |
|---|---|---|---|---|---|
| | [mPas] | [Shore A] | [N/mm] | [N/mm²] | [%] |
| Beispiel 2* | 950.000 | 31 | 25 | 9,1 | 590 |
| Beispiel 3* | 930.000 | 32 | 32 | 9,1 | 540 |
| Beispiel 4* | 1.950.000 | 28 | 28 | 8,7 | 750 |
| Beispiel 5* | 2.010.000 | 30 | 26 | 9,2 | 720 |
| Beispiel 6* | 970.000 | 30 | 26 | 8,5 | 610 |
| Beispiel 7* | 950.000 | 31 | 31 | 8,4 | 560 |
| Beispiel 8* | 1.900.000 | 30 | 36 | 8,8 | 580 |
| Beispiel 9 | 1.890.000 | 32 | 39 | 9,3 | 710 |
| Beispiel 10 | 1.870.000 | 30 | 40 | 8,9 | 740 |

| | | | | | |
|---|---|---|---|---|---|
| *nicht erfindungsgemäß | | | | | |

Aus Tabelle 1 ist ersichtlich, dass durch Verwendung eines hochviskosen Polydiorganosiloxans mit einer Viskosität von 20.000.000 mPas, das keine beziehungsweise nur wenige Vinylgruppen aufweist, in Kombination mit einem vinylreichen, niedrigviskosen Polydiorganosiloxan, LSR-Elastomere erhalten werden, die sehr hohe Reißdehnungen und Weiterreißwiderstände aufweisen.

### Beispiel 11 (nicht erfindungsgemäß)

### Herstellung der Grundmasse:

In einem Laborkneter wurden 750 g eines vinyldimethylsiloxy-terminierten Polydimethylsiloxans mit einer Viskosität von 300.000 mPas (25°C) vorgelegt und mit 121 g Hexamethyldisilazan und 6 g 1,3-Divinyltetramethyldisilazan und 127 g Wasser gemischt, anschließend mit 522 g pyrogener Kieselsäure mit einer spezifischen Oberfläche nach BET von 300 m2/g vermischt, auf 100°C erwärmt und anschließend 1 Stunde geknetet. Danach wurden bei 150°C 2 Stunden flüchtige Bestandteile im Vakuum entfernt und anschließend mit 220 g eines vinyldimethylsiloxy-terminierten Polydimethylsiloxans mit einer Viskosität von 20.000 mPas (25°C) verdünnt.

### Beispiel 12 (nicht erfindungsgemäß)

560 g der in Beispiel 11 hergestellten Grundmasse wurden auf einer Walze bei einer Temperatur von 25°C mit 140 g eines vinyldimethylsiloxy-terminierten Polydimethylsiloxans mit einer Viskosität von 20.000 mPas (25°C), 0,50 g Ethinylcyclohexanol, 17,9 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt.

Die Vernetzung der additionsvernetzenden Masse erfolgte wie in Beispiel 2 beschrieben.

### Beispiel 13 (nicht erfindungsgemäß)

560 g der in Beispiel 11 hergestellten Grundmasse wurden auf einer Walze bei einer Temperatur von 25°C mit 95 g eines vinyldimethylsiloxy-terminierten Polydimethylsiloxans mit einer Viskosität von 20.000 mPas (25°C), 45 g eines vinyldimethylsiloxy-terminierten Polydimethylsiloxans, welches 6,2 Mol.-% Vinylmethylsiloxy-Einheiten in der Kette und eine Viskosität von 3.000 mPas (25°C) aufweist, 0,50 g Ethinylcyclohexanol, 17,9 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt.

Die Vernetzung der additionsvernetzenden Masse erfolgte wie in Beispiel 2 beschrieben.

### Beispiel 14 (nicht erfindungsgemäß)

Wie in Beispiel 12 beschrieben, jedoch wurde anstelle des in Beispiel 12 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

### Beispiel 15 (nicht erfindungsgemäß)

Wie in Beispiel 12 beschrieben, jedoch wurde anstelle des in Beispiel 12 verwendeten vinyldimethylsiloxy-terminierten Polydimethylsiloxans mit einer Viskosität von 20.000 mPas (25°C) ein vinyldimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

### Beispiel 16 (nicht erfindungsgemäß)

Wie in Beispiel 12 beschrieben, jedoch wurde anstelle des in Beispiel 12 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 30.000 mPas (25°C) eingesetzt. Die übrige Zusammensetzung der Siliconmasse sowie die Weiterverarbeitung blieben unverändert.

### Beispiel 17 (nicht erfindungsgemäß)

Wie in Beispiel 13 beschrieben, jedoch wurde anstelle des in Beispiel 13 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 30.000 mPas (25°C) eingesetzt. Die übrige Zusammensetzung der Siliconmasse sowie die Weiterverarbeitung blieben unverändert.

### Beispiel 18 (nicht erfindungsgemäß)

Wie in Beispiel 13 beschrieben, jedoch wurde anstelle des in Beispiel 13 verwendeten vinyldimethylsiloxy-terminierten Polydimethylsiloxans mit einer Viskosität von 20.000 mPas (25°C) ein vinyldimethylsiloxy-terminiertes Polydimethylsiloxan mit einer Viskosität von 20.000.000 mPas (25°C) eingesetzt, das fünf kettenständige Vinylgruppen aufweist. Die übrige Zusammensetzung der Siliconmasse sowie die Weiterverarbeitung blieben unverändert.

### Beispiel 19

Wie in Beispiel 13 beschrieben, jedoch wurde anstelle des in Beispiel 13 verwendeten vinyldimethylsiloxy-terminierten Polydimethylsiloxans mit einer Viskosität von 20.000 mPas (25°C) ein vinyldimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

### Beispiel 20

Wie in Beispiel 13 beschrieben, jedoch wurde anstelle des in Beispiel 13 verwendeten vinyldimethylsiloxy-terminierten Polydimethylsiloxans mit einer Viskosität von 20.000 mPas (25°C) ein trimethylsiloxy-terminiertes Polydimethylsiloxan mit einer Viskosität von 20.000.000 mPas (25°C) eingesetzt. Die übrige Zusammensetzung der Siliconmasse sowie die Weiterverarbeitung blieben unverändert.

Einfluss der Viskosität eines hochviskosen vinyldimethylbeziehungsweise trimethylsiloxy-terminierten Polydimethylsiloxans und eines Polydiorganosiloxans mit kettenständigen Alkenylgruppen auf die mechanischen Eigenschaften von LSR-Elastomeren ist in Tabelle 2 wiedergegeben.

**Tabelle 2**

| | Viskosität der unvernetzten LSR-Masse | Härte | Weiterreiß- widerstand (ASTM D624) | Reiß- festigkeit | Reißdehnung |
|---|---|---|---|---|---|
| | [mPas] | [Shore A] | [N/mm] | [N/mm²] | [%] |
| Beispiel 12* | 1.730.000 | 51 | 26 | 9,7 | 520 |
| Beispiel 13* | 1.650.000 | 53 | 39 | 9,8 | 470 |
| Beispiel 14* | 2.600.000 | 48 | 28 | 9,2 | 680 |
| Beispiel 15* | 2.750.000 | 50 | 27 | 10,0 | 670 |
| Beispiel 16* | 1.630.000 | 49 | 25 | 8,9 | 510 |
| Beispiel 17* | 1.580.000 | 52 | 36 | 8,3 | 480 |
| Beispiel 18* | 2.500.000 | 52 | 45 | 9,8 | 540 |
| Beispiel 19 | 2.530.000 | 52 | 48 | 10,1 | 680 |
| Beispiel 20 | 2.490.000 | 52 | 50 | 10,1 | 700 |

| | | | | | |
|---|---|---|---|---|---|
| *nicht erfindungsgemäß | | | | | |

Aus Tabelle 2 ist ersichtlich, dass durch Verwendung eines hochviskosen Polydiorganosiloxans mit einer Viskosität von 20.000.000 mPas, das keine beziehungsweise nur wenige Vinylgruppen aufweist, in Kombination mit einem vinylreichen, niedrigviskosen Polydiorganosiloxan, LSR-Elastomere erhalten werden, die sehr hohe Reißdehnungen und Weiterreißwiderstände aufweisen.

### Beispiel 21

560 g der in Beispiel 1 hergestellten Grundmasse wurden auf einer Walze bei einer Temperatur von 25°C mit 140 g eines trimethylsiloxy-terminierten Polydimethylsiloxans mit einer Viskosität von 20.000.000 mPas (25°C), das einen hohen Anteil restlicher Hydroxydimethylsiloxy-Endgruppen von 150 Gew.-ppm OH bezogen auf das verwendete Polydimethylsiloxan aufweist, und 11,4 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% vermischt.

### Beispiel 22

Wie in Beispiel 21 beschrieben, jedoch wurde anstelle des in Beispiel 21 verwendeten trimethylsiloxy-terminierten Polydimethylsiloxans mit einem hohen SiOH-Gehalt ein trimethylsiloxy-terminiertes Polydimethylsiloxan mit einer Viskosität von 20.000.000 mPas (25°C) verwendet, das einen niedrigen Anteil restlicher Hydroxydimethylsiloxy-Endgruppen von 3 Gew.-ppm OH bezogen auf das verwendete Polydimethylsiloxan aufweist.

Tabelle 3 zeigt den Einfluss des OH-Gehalts des hochviskosen Polydiorganosiloxans auf die Lagerstabilität.

**Tabelle 3**

| | OH-Gehalt des trimethyl-siloxy - terminierten Polydimethyl-siloxans [ppm] | Anfangsviskosität der Siliconmasse [Pa*s] | Viskosität der Siliconmasse nach 4 Wochen bei 25°C [Pa*s] |
|---|---|---|---|
| Beispiel 21 | 150 | 2.830 | 7.830 |
| Beispiel 22 | 3 | 2.530 | 2.590 |

Aus Tabelle 3 ist ersichtlich, dass ein niedriger OH-Gehalt des hochviskosen Polydiorganosiloxans die Lagerstabilität erheblich verbessert.

Die Charakterisierung der Siliconelastomereigenschaften in den Beispielen 2-10 sowie 12-20 erfolgten gemäß DIN 53505, für Shore A, DIN 53504-S1 für Reißfestigkeit und Reißdehnung und ASTM D 624 B für Weiterreißwiderstand. Die Viskosität wurde bei einer Scherrate von 0,9 s-1 bestimmt.

## Patentansprüche

1. Additionsvernetzbare Siliconmassen, enthaltend
(A) 100 Gewichtsteile vinylendständiges Polydiorganosiloxan mit einer Viskosität von 5.000 bis 1.000.000 mPas, wobei das Polydiorganosiloxan maximal 0,1 Mol.-% kettenständige Vinylgruppen aufweist,
(B) 0,1 bis 50 Gewichtsteile Polydiorganosiloxan mit einer Viskosität von 200 bis 1.000.000 mPas, wobei das Polydiorganosiloxan 0,5 bis 30 Mol.-% kettenständige Vinylgruppen aufweist,
(C) 1 bis 150 Gewichtsteile Polydiorganosiloxan mit einer Viskosität von mindestens 2.000.000 mPas, wobei das Polydiorganosiloxan keine bis maximal drei kettenständige Vinylgruppen pro Polymerkette aufweist,
(D) SiH-funktionelles Vernetzungsmittel,
(E) Hydrosilylierungskatalysator und
(F) 0-90 Gewichtsteile eines Füllstoffs mit einer spezifischen Oberfläche von mindestens 50 m²/g.

2. Additionsvernetzbare Siliconmassen gemäß Anspruch 1, **dadurch gekennzeichnet, dass** das Polydiorganosiloxan (A) aus
2 Einheiten der allgemeinen Formel (1) je Molekül
[R₂R¹SiO_{1/2}] (1),
und Einheiten der allgemeinen Formel (2)
[R₂SiO_{2/2}] (2)
besteht und eine Viskosität von 5.000 bis 1.000.000 mPas aufweist,
wobei
R gleiche oder verschiedene einwertige, gegebenenfalls halogen- oder cyanosubstituierte, über SiC-gebundene C₁-C₁₈-Kohlenwasserstoffreste, die frei sind von aliphatischen Kohlenstoff-Kohlenstoff Mehrfachbindungen und
R¹ gleiche oder verschiedene einwertige, gegebenenfalls halogen- oder cyanosubstituierte, gegebenenfalls über eine organische zweiwertige Gruppe an Silicium gebundene C₁-C₁₀-Alkenylgruppen
bedeuten.

3. Additionsvernetzbare Siliconmassen gemäß einem der Ansprüche 1 oder 2, **dadurch gekennzeichnet, dass** das vinylgruppenhaltige Polydiorganosiloxans (B) aus
Einheiten der allgemeinen Formel (2),
0,5 bis 30 mol-% Einheiten der allgemeinen Formel (4)
[RR¹SiO_{2/2}] (4),
und 0, 1 oder 2 Einheiten der allgemeinen Formel (1) oder 2, 1 oder 0 Einheiten der allgemeinen Formel (5) je Molekül
[R₃SiO_{1/2}] (5),
besteht und eine Viskosität von 200 bis 1.000.000 mPas aufweist, wobei R und R¹ die selbe Bedeutung haben, wie oben.

4. Additionsvernetzbare Siliconmassen gemäß einem der Ansprüche 1 bis 3, **dadurch gekennzeichnet, dass** das Polydiorganosiloxan (C) aus
0, 1 oder 2 Einheiten der allgemeinen Formel (1) oder 2, 1 oder 0 Einheiten der allgemeinen Formel (5) je Molekül,
Einheiten der allgemeinen Formel (2) und
0, 1 , 2 oder 3 Einheiten der allgemeinen Formel (4) je Molekül
besteht und eine Viskosität von mindestens 2.000.000 mPas aufweist.

5. Additionsvernetzbare Siliconmassen gemäß einem der Ansprüche 1 bis 4, **dadurch gekennzeichnet, dass** das Polydiorganosiloxan (C) einen Si-gebundenen OH-Gehalt von maximal 100 Gew.-ppm aufweist.

6. Additionsvernetzbare Siliconmassen gemäß einem der Ansprüche 1 bis 5, **dadurch gekennzeichnet, dass** die Viskosität des Polydiorganosiloxans (B) höchstens 200% und die Viskosität des Polydiorganosiloxans (C) mindestens 500% der Viskosität des Polydiorganosiloxans (A) beträgt.

7. Additionsvernetzbare Siliconmassen gemäß einem der Ansprüche 1 bis 6, **dadurch gekennzeichnet, dass** als SiH-Vernetzer (D) solcher aus Einheiten der allgemeinen Formel (6)
HₐR³_{b}SiO_{(4-a-b)/2} (6),
eingesetzt wird, wobei
R³ unabhängig von einander einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff-Mehrfachbindungen,
a 0, 1, 2 oder 3,
b 0, 1, 2 oder 3, und
die Summe a+b≤3
bedeuten,
mit der Maßgabe, dass mindestens zwei siliciumgebundene Wasserstoffatome pro Molekül vorhanden sind.

8. Additionsvernetzbare Siliconmassen gemäß einem der Ansprüche 1 bis 7, **dadurch gekennzeichnet, dass** als Hydrosilylierungskatalysator (E) Metalle und deren Verbindungen aus der Gruppe enthaltend Platin, Rhodium, Palladium, Ruthenium und Iridium eingesetzt werden.

9. Additionsvernetzbare Siliconmassen gemäß einem der Ansprüche 1 bis 8, **dadurch gekennzeichnet, dass** der verstärkende Füllstoff (F) ausgewählt wird aus der Gruppe enthaltend gefällte und pyrogene Kieselsäuren sowie Ruß.

10. Additionsvernetzbare Siliconmassen gemäß einem der Ansprüche 1 bis 9, **dadurch gekennzeichnet, dass** 0 bis 70 Gew.-% weitere Bestandteile (G) eingesetzt werden, ausgewählt aus der Gruppe enthaltend harzartige Polyorganosiloxane, die von den Polyorganosiloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren, Inhibitoren, Thixotropieadditive, Hohlkörper, expandierende Hohlkörper, Treibmittel.

11. Verfahren zur Herstellung von additionsvernetzbaren Siliconmassen gemäß einem der Ansprüche 1 bis 10, **dadurch gekennzeichnet, dass** die Komponenten (A), (B), (C) und (F) vermischt werden und die Vernetzung nach Zugabe von (D) und (E) erfolgt.

12. Verfahren zur Herstellung von additionsvernetzbaren Siliconmassen gemäß einem der Ansprüche 1 bis 10, **dadurch gekennzeichnet, dass** die erste Komponente neben (A), (B), (C) und (F) den Hydrosilylierungskatalysator (E) und die zweite Komponente neben (A), (B), (C) und (F) den SiH-Vernetzer (D) enthält.

13. Verwendung von additionsvernetzbaren Siliconmassen gemäß einem der Ansprüche 1 bis 10 zur Herstellung von additionsvernetzenden RTV- und LSR-Massen.

14. Siliconelastomere erhältlich durch Additionsvernetzung einer additionsvernetzbaren Siliconmasse gemäß einem der Ansprüche 1 bis 10.

15. Verwendung der Siliconelastomere gemäß Anspruch 14 als Schnuller oder Dichtung.

## Claims

1. Addition-crosslinkable silicone compositions comprising
(A) 100 parts by weight of vinyl-terminated polydiorganosiloxane having a viscosity of from 5000 to 1 000 000 mPas, with the polydiorganosiloxane having not more than 0.1 mol% of lateral vinyl groups,
(B) from 0.1 to 50 parts by weight of polydiorganosiloxane having a viscosity of from 200 to 1 000 000 mPas, with the polydiorganosiloxane having from 0.5 to 30 mol% of lateral vinyl groups,
(C) from 1 to 150 parts by weight of polydiorganosiloxane having a viscosity of at least 2 000 000 mPas, with the polydiorganosiloxane having from no to a maximum of three lateral vinyl groups per polymer chain,
(D) SiH-functional crosslinker,
(E) hydrosilylation catalyst and
(F) 0-90 parts by weight of a filler having a specific surface area of at least 50 m²/g.

2. Addition-crosslinkable silicone compositions according to Claim 1, **characterized in that** the polydiorganosiloxane (A) comprises
2 units of the general formula (1) per molecule
[R₂R¹SiO_{1/2}] (1),
and units of the general formula (2)
[R₂SiO_{2/2}] (2)
and has a viscosity of from 5000 to 1 000 000 mPas,
where
the radicals R are identical or different monovalent, unsubstituted or halogen- or cyano-substituted, SiC-bonded C₁-C₁₈-hydrocarbon radicals which are free of aliphatic carbon-carbon multiple bonds and
the radicals R¹ are identical or different monovalent, unsubstituted or halogen- or cyano-substituted C₁-C₁₀ alkenyl groups which may be bound to silicon via a divalent organic group.

3. Addition-crosslinkable silicone compositions according to either Claim 1 or 2, **characterized in that** the vinyl-containing polydiorganosiloxane (B) preferably comprises
units of the general formula (2),
from 0.5 to 30 mol% of units of the general formula (4)
[RR¹SiO_{2/2}] (4),
and 0, 1 or 2 units of the general formula (1) or 2, 1 or 0 units of the general formula (5) per molecule
[R₃SiO_{1/2}] (5),
and has a viscosity of from 200 to 1 000 000 mPas, where R and R¹ are as defined above.

4. Addition-crosslinkable silicone compositions according to any of Claims 1 to 3, **characterized in that** the polydiorganosiloxane (C) comprises
0, 1 or 2 units of the general formula (1) or 2, 1 or 0 units of the general formula (5) per molecule,
units of the general formula (2) and
0, 1 , 2 or 3 units of the general formula (4) per molecule
and has a viscosity of at least 2 000 000 mPas.

5. Addition-crosslinkable silicone compositions according to any of Claims 1 to 4, **characterized in that** the polydiorganosiloxane (C) has an Si-bonded OH content of not more than 100 ppm by weight.

6. Addition-crosslinkable silicone compositions according to any of Claims 1 to 5, **characterized in that** the viscosity of the polydiorganosiloxane (B) is not more than 200% of the viscosity of the polydiorganosiloxane (A) and the viscosity of the polydiorganosiloxane (C) is at least 500% of the viscosity of the polydiorganosiloxane (A).

7. Addition-crosslinkable silicone compositions according to any of Claims 1 to 6, **characterized in that** the SiH crosslinker (D) used comprises units of the general formula (6)
HₐR³_{b}SiO_{(4-a-b)/2} (6),
where
the radicals R³ are each, independently of one another, a monovalent, unsubstituted or halogen- or cyano-substituted, SiC-bonded C₁-C₁₀-hydrocarbon radical which is free of aliphatic carbon-carbon multiple bonds,
a is 0, 1, 2 or 3,
b is 0, 1, 2 or 3 and
the sum a + b is ≤ 3,
with the proviso that at least two silicon-bonded hydrogen atoms are present per molecule.

8. Addition-crosslinkable silicone compositions according to any of Claims 1 to 7, **characterized in that** metals and their compounds from the group consisting of platinum, rhodium, palladium, ruthenium and iridium are used as hydrosilylation catalyst (E).

9. Addition-crosslinkable silicone compositions according to any of Claims 1 to 8, **characterized in that** the reinforcing filler (F) is selected from the group consisting of precipitated and pyrogenic silicas and carbon black.

10. Addition-crosslinkable silicone compositions according to any of Claims 1 to 9, **characterized in that** from 0 to 70% by weight of further constituents (G) selected from the group consisting of resin-like polyorganosiloxanes which are different from the polyorganosiloxanes (A), (B) and (C), dispersants, solvents, bonding agents, pigments, dyes, plasticizers, organic polymers, heat stabilizers, inhibitors, additives for inducing thixotropy, hollow bodies, expandable hollow bodies, blowing agents are used.

11. Process for preparing addition-crosslinkable silicone compositions according to any of Claims 1 to 10, **characterized in that** the components (A), (B), (C) and (F) are mixed and crosslinking is effected by addition of (D) and (E).

12. Process for preparing addition-crosslinkable silicone compositions according to any of Claims 1 to 10, **characterized in that** the first component comprises the hydrosilylation catalyst (E) in addition to (A), (B), (C) and (F) and the second component comprises the SiH crosslinker (D) in addition to (A), (B), (C) and (F).

13. Use of addition-crosslinkable silicone compositions according to any of Claims 1 to 10 for preparing addition-crosslinking RTV and LSR compositions.

14. Silicone elastomers obtainable by addition-crosslinking of an addition-crosslinkable silicone composition according to any of Claims 1 to 10.

15. Use of the silicone elastomers according to Claim 14 as pacifier or seal.

## Revendications

1. Compositions de silicone réticulables par addition, contenant
(A) 100 parties en poids de polydiorganosiloxane à groupe vinyle en bout de chaîne, ayant une viscosité de 5 000 à 1 000 000 mPa.s, le polydiorganosiloxane comportant au maximum 0,1 % en moles de groupes vinyle sur la chaîne,
(B) 0,1 à 50 parties en poids de polydiorganosiloxane ayant une viscosité de 200 à 1 000 000 mPa.s, le polydiorganosiloxane comportant de 0,5 à 30 % en moles de groupes vinyle sur la chaîne,
(C) 1 à 150 parties en poids de polydiorganosiloxane ayant une viscosité d'au moins 2 000 000 mPa.s, le polydiorganosiloxane ne comportant aucun groupe vinyle sur la chaîne ou comportant jusqu'à un maximum de trois groupes vinyle sur la chaîne, par chaîne polymère,
(D) un agent de réticulation à fonction SiH,
(E) un catalyseur d'hydrosilylation et
(F) 0-90 parties en poids d'une charge ayant une surface spécifique d'au moins 50 m²/g.

2. Compositions de silicone réticulables par addition selon la revendication 1, **caractérisées en ce que** le polydiorganosiloxane (A) est constitué de
2 motifs de formule générale (1) par molécule
[R₂R¹SiO_{1/2}] (1),
et de motifs de formule générale (2)
[R₂SiO_{2/2}] (2)
et a une viscosité de 5 000 à 1 000 000 mPa.s,
R représentant des radicaux hydrocarbonés en C₁-C₁₈ identiques ou différents, monovalents, éventuellement substitués par halogène ou cyano, qui sont exempts de liaisons multiples carbone-carbone aliphatiques et
R¹ représente des groupes alcényle en C₁-C₁₀ identiques ou différents, monovalents, éventuellement substitués par halogène ou cyano, liés au silicium éventuellement par un groupe organique divalent.

3. Compositions de silicone réticulables par addition selon la revendication 1 ou 2, **caractérisées en ce que** le polydiorganosiloxane (B) contenant des groupes vinyle est constitué de
motifs de formule générale (2),
0,5 à 30 % en moles de motifs de formule générale (4)
[RR¹SiO_{2/2}] (4),
et 0, 1 ou 2 motif(s) de formule générale (1) ou 2, 1 ou 0 motif (s) de formule générale (5) par molécule
[R₃SiO_{1/2}] (5),
et a une viscosité de 200 à 1 000 000 mPa.s, R et R¹ ayant les mêmes significations que celles données plus haut.

4. Compositions de silicone réticulables par addition selon l'une quelconque des revendications 1 à 3, **caractérisées en ce que** le polydiorganosiloxane (C) est constitué de
0, 1 ou 2 motif(s) de formule générale (1) ou 2, 1 ou 0 motif (s) de formule générale (5) par molécule,
motifs de formule générale (2) et
0, 1, 2 ou 3 motif(s) de formule générale (4) par molécule
et a une viscosité d'au moins 2 000 000 mPa.s.

5. Compositions de silicone réticulables par addition selon l'une quelconque des revendications 1 à 4, **caractérisées en ce que** le polydiorganosiloxane (C) a une teneur en groupes OH liés à Si d'au maximum 100 ppm en poids.

6. Compositions de silicone réticulables par addition selon l'une quelconque des revendications 1 à 5, **caractérisées en ce que** la viscosité du polydiorganosiloxane (B) représente au maximum 200 % et la viscosité du polydiorganosiloxane (C) représente au moins 500 % de la viscosité du polydiorganosiloxane (A).

7. Compositions de silicone réticulables par addition selon l'une quelconque des revendications 1 à 6, **caractérisées en ce qu'**on utilise comme agents de réticulation (D) à fonction SiH ceux constitués de motifs de formule générale (6)
HₐR³_{b}SiO_{(4-a-b)/2} (6)
où
R³ représentent, chacun indépendamment, des radicaux hydrocarbonés en C₁-C₁₀ monovalents, éventuellement substitués par halogène ou cyano, qui sont exempts de liaisons multiples carbone-carbone aliphatiques,
a est 0, 1, 2 ou 3,
b est 0, 1, 2 ou 3, et
la somme a+b est ≤ 3,
étant entendu qu'au moins deux atomes d'hydrogène liés au silicium sont présents par molécule.

8. Compositions de silicone réticulables par addition selon l'une quelconque des revendications 1 à 7, **caractérisées en ce qu'**on utilise comme catalyseur d'hydrosilylation (E) des métaux et leurs composés, choisis dans l'ensemble comportant le platine, le rhodium, le palladium, le ruthénium et l'iridium.

9. Compositions de silicone réticulables par addition selon l'une quelconque des revendications 1 à 8, **caractérisées en ce que** la charge de renforcement (F) est choisie dans l'ensemble comprenant les acides siliciques précipités et les acides siliciques pyrogénés ainsi que le noir de carbone.

10. Compositions de silicone réticulables par addition selon l'une quelconque des revendications 1 à 9, **caractérisées en ce qu'**on utilise de 0 à 70 % en poids d'autres composants (G), choisis dans l'ensemble comportant des polyorganosiloxanes de type résine qui sont différents des polyorganosiloxanes (A), (B) et (C), des adjuvants de dispersion, des solvants, des promoteurs d'adhérence, des pigments, des colorants, des plastifiants, des polymères organiques, des stabilisants à la chaleur, des inhibiteurs, des additifs de thixotropie, des corps creux, des corps creux expansés, des agents d'expansion.

11. Procédé pour la production de compositions de silicone réticulables par addition, selon l'une quelconque des revendications 1 à 10, **caractérisé en ce qu'**on mélange les composants (A), (B), (C) et (F) et la réticulation s'effectue après addition de (D) et (E).

12. Procédé pour la production de compositions de silicone réticulables par addition, selon l'une quelconque des revendications 1 à 10, **caractérisé en ce qu'**en plus de (A), (B), (C) et (F), le premier composant contient le catalyseur d'hydrosilylation (E) et en plus de (A), (B), (C) et (F), le deuxième composant contient l'agent de réticulation (D) à fonction SiH.

13. Utilisation des compositions de silicone réticulables par addition, selon l'une quelconque des revendications 1 à 10, pour la production de matières RTV (vulcanisables à température ambiante) et LSR (caoutchouc silicone liquide).

14. Elastomères silicone pouvant être obtenus par réticulation par addition d'une composition de silicone réticulable par addition, selon l'une quelconque des revendications 1 à 10.

15. Utilisation des élastomères silicone selon la revendication 14, en tant que tétine ou garniture d'étanchéité.
